# EUROPEAN PATENT APPLICATION

(11) **EP 4 604 492 A1**
(43) Date of publication of application: **20.08.2025**
(21) Application number: 23876358.5
(22) Date of filing: 24.08.2023
(51) Int. Cl.: H04L 67/025

(54) **REMOTE CONTROL METHOD, DOMAIN CONTROLLER, AND VEHICLE**

(30) Priority: 14.10.2022 CN 202211262537
(71) Applicant: Guangzhou Automobile Group Co. Ltd., Guangzhou, Guangdong 510030 (CN)
(72) Inventor: WANG, Jingrong, Guangzhou, Guangdong 511434 (CN); CHE, Long, Guangzhou, Guangdong 511434 (CN); HOU, Xuguang, Guangzhou, Guangdong 511434 (CN); YAO, Ang, Guangzhou, Guangdong 511434 (CN); HUANG, Lifang, Guangzhou, Guangdong 511434 (CN); QUAN, Xiangtao, Guangzhou, Guangdong 511434 (CN)
(74) Representative: Zaboliene, Reda
(86) International application number: PCT/CN2023/114792
(87) International publication number: WO 2024/078153

(57) **Abstract**

Disclosed in the embodiments of the present application are a remote control method, a domain controller, and a vehicle. The method includes: a first core starting up in response to a received remote control instruction; if the first core confirms that the type of the remote control instruction is a quick response type, the first core executing the remote control instruction; and if the first core confirms that the type of the remote control instruction is a non-quick response type, after a second core starts up, the first core sending the remote control instruction to the second core, such that the second core executes the remote control instruction, wherein the time required for the startup of the first core is shorter than the time required for the startup of the second core. In this way, after a first core starts up in response to a received remote control instruction, if the first core confirms that the type of the remote control instruction is a quick response type, the first core can execute the remote control instruction; and since the time required for the startup of the first core is shorter than the time required for the startup of a second core, the response speed of the remote control instruction of the quick response type is increased.

## Description

The present application claims priority to Chinese Patent Application No. 202211262537.6, filed with the China National Intellectual Property Administration on October 14, 2022, and entitled "REMOTE CONTROL METHOD, DOMAIN CONTROLLER, AND VEHICLE", which is incorporated herein by reference in its entirety.

### TECHNICAL FIELD

The present application relates to the field of automobile technologies, and more specifically, to a remote control method, a domain controller, and a vehicle.

### BACKGROUND

With the development of automobile manufacturing technology and the improvement of people's living standards, users increasingly tend to use mobile phones to remotely control vehicles. For example, the vehicles are unlocked and locked by the mobile phones without carrying physical keys; for another example, the vehicle windows can be closed remotely by the mobile phones when forgotten to be closed; and the air conditioner is started in advance through remote control before the vehicle is used, and the like. With the increase of remote control application scenarios, users have higher requirements on the response time of remotely controlling vehicles.

In the related technology, the remote control instruction can be delivered to a vehicle-side controller through a cloud server, such that the vehicle-side controller can execute the remote control instruction. However, in the related technology, when the vehicle-side controller is in a dormant state, the vehicle-side controller needs to be woken up before the vehicle-side controller can execute the remote control instruction, which slows the response time of the vehicle to the remote control instruction, thereby reducing the user experience. If the vehicle-side controller is always in the wakeup state, the vehicle battery may be depleted.

### SUMMARY

In view of the foregoing problem, embodiments of the present application provide a remote control method, a domain controller, and a vehicle, so as to improve the foregoing problems.

According to a first aspect, an embodiment of the present application provides a remote control method, wherein the method includes: a first core starting up in response to a received remote control instruction; if the first core confirms that the type of the remote control instruction is a quick response type, the first core executing the remote control instruction; and
if the first core confirms that the type of the remote control instruction is a non-quick response type, after a second core starts up, the first core sending the remote control instruction to the second core, such that the second core executes the remote control instruction, wherein the time required for the startup of the first core is shorter than the time required for the startup of the second core.

According to a second aspect, an embodiment of the present application provides a domain controller, wherein the domain controller includes a first core and a second core, wherein: the first core is configured to startup in response to a received remote control instruction; confirm the type of the remote control instruction; if confirming that the type of the remote control instruction is a quick response type, execute the remote control instruction; and if confirming that the type of the remote control instruction is a non-quick response type, send the remote control instruction to the second core after a second core starts up, such that the second core executes the remote control instruction, wherein the time required for the startup of the first core is shorter than the time required for the startup of the second core; and the second core is configured to, if the first core confirms that the type of the remote control instruction is the non-quick response type, receive the remote control instruction sent by the first core after starting up and execute the remote control instruction.

According to a third aspect, an embodiment of the present application provides a vehicle, including a domain controller and a memory; wherein the domain controller includes a first core and a second core, one or more programs are stored in the memory and configured to be executed by the domain controller, and the one or more programs are configured to perform the above method.

According to a fourth aspect, an embodiment of the present application provides a computer-readable storage medium, wherein the computer-readable storage medium stores program code, and the above method is performed when the program code is run.

According to the remote control method, the domain controller, the vehicle, and the storage medium provided by the present application, after a first core starts up in response to a received remote control instruction, if the first core confirms that the type of the remote control instruction is a quick response type, the first core executes the remote control instruction; and if the first core confirms that the type of the remote control instruction is a non-quick response type, after a second core starts up, the first core sends the remote control instruction to the second core, such that the second core executes the remote control instruction, wherein the time required for the startup of the first core is shorter than the time required for the startup of the second core. In this way, after a first core starts up in response to a received remote control instruction, if the first core confirms that the type of the remote control instruction is a quick response type, the first core can execute the remote control instruction; if the first core confirms that the type of the remote control instruction is a non-quick response type, after a second core starts up, the first core sends the remote control instruction to the second core, such that the second core executes the remote control instruction; and since the time required for the startup of the first core is shorter than the time required for the startup of the second core, the response speed of the remote control instruction of the quick response type is increased.

### BRIEF DESCRIPTION OF DRAWINGS

To describe technical solutions in embodiments of the present application more clearly, the following briefly describes the accompanying drawings required for describing embodiments. Apparently, the accompanying drawings in the following descriptions show merely some embodiments of the present application, and those of ordinary skill in the art may still derive other accompanying drawings from these accompanying drawings without creative efforts.
FIG. 1 is a framework diagram of a domain controller according to the present application;
FIG. 2 is a flowchart of a remote control method according to an embodiment of the present application;
FIG. 3 is a schematic diagram of the startup of a first core and a second core according to the present application;
FIG. 4 is a flowchart of a remote control method according to another embodiment of the present application;
FIG. 5 is a schematic diagram of an implementation of S230 in FIG. 4 according to the present application;
FIG. 6 is a schematic diagram of a first core executing a remote control instruction of a quick response type according to the present application;
FIG. 7 is a flowchart of a remote control method according to another embodiment of the present application;
FIG. 8 is a schematic diagram of a second core executing a remote control instruction of a non-quick response type according to the present application;
FIG. 9 is a schematic diagram of an implementation of S360 in FIG. 7 according to the present application;
FIG. 10 is a block diagram of a structure of a domain controller according to an embodiment of the present application;
FIG. 11 is a block diagram of a structure of a vehicle according to the present application; and
FIG. 12 is a storage unit for storing or carrying code that implements a remote control method according to an embodiment of the present application.

### DETAILED DESCRIPTION OF EMBODIMENTS

The following clearly and completely describes the technical solutions in embodiments of the present application with reference to the accompanying drawings in embodiments of the present application. All other embodiments obtained by those of ordinary skill in the art based on embodiments of the present application without creative efforts shall fall within the protection scope of the present application.

In embodiments of the present application, the inventors propose a remote control method, a domain controller, and a vehicle, wherein after a first core starts up in response to a received remote control instruction, if the first core confirms that the type of the remote control instruction is a quick response type, the first core executes the remote control instruction; and if the first core confirms that the type of the remote control instruction is a non-quick response type, after a second core starts up, the first core sends the remote control instruction to the second core, such that the second core executes the remote control instruction, wherein the time required for the startup of the first core is shorter than the time required for the startup of the second core. In this way, after a first core starts up in response to a received remote control instruction, if the first core confirms that the type of the remote control instruction is a quick response type, the first core can execute the remote control instruction; if the first core confirms that the type of the remote control instruction is a non-quick response type, after a second core starts up, the first core sends the remote control instruction to the second core, such that the second core executes the remote control instruction; and since the time required for the startup of the first core is shorter than the time required for the startup of the second core, the response speed of the remote control instruction of the quick response type is increased.

To better understand the solutions of the embodiments of the present application, the technical terms used in the embodiments of the present application are explained below.

The automotive open system architecture (AUTomotive Open Systems ARchitecture, AUTOSAR) may be a collaborative development framework for automotive electronic systems involving global automakers, parts suppliers, and various research and service organizations. The tool chain corresponding to the AUTOSAR is mature and the generated code is highly reliable, which can help automobile companies shorten the development cycle, improve development efficiency and reduce development costs. The AUTOSAR may have two platforms, namely classic platform (Classic Platform, CP) and adaptive platform (Adaptive Platform, AP). The AP platform may be configured to provide high-performance computing and communication mechanisms, as well as flexible software configuration to support the automatic driving function of the vehicle. The CP platform may be configured to implement data transmission and control of the traditional embedded electronic control unit (Electronic Control Unit, ECU) in the vehicle.

The domain controller (Compact Control Unit) may be a control center of the vehicle and mainly has the functions of vehicle control, bus management, data communication, and the like.

To better understand the solutions of the embodiments of the present application, the framework of the domain controller of the present application is described below.

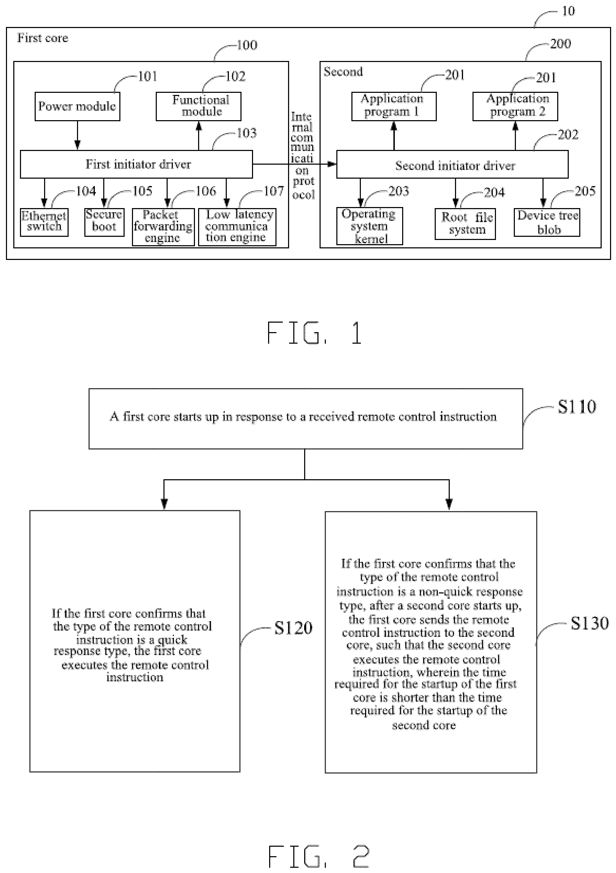

Referring to FIG. 1, a domain controller 10 according to the present application may include a first core 100 and a second core 200. The first core 100 may be a Cortex-M core processor, an operating system corresponding to the first core 100 may be a real-time operating system AUTOSAR Classic OS, and a first platform is run on the first core 100, and the first platform may implement remote real-time control on a vehicle. The second core 200 may be a Cortex-A core processor, an operating system corresponding to the second core may be a Linux system, a second platform is further run on the second core 200, and the second platform may be configured to implement many other functions of the vehicle. The time required for the startup of the first core 100 is shorter than the time required for the startup of the second core 200.

In FIG. 1, the first core 100 may include a power module 101, a functional module 102, a first initiator driver 103, an Ethernet switch 104, a secure boot (Secure Boot, SECBoot) 105, a packet forwarding engine (Packet Forwarding Engine, PFE) 106, and a low latency communication engine 107. The power module 101 may be configured to supply power to various components in the entire domain controller 10. The functional module 102 may be configured to implement various functions of the first core 100, such as receiving, analyzing and determining remote control instructions, and controlling other components of the vehicle to implement the received remote control instructions. The first initiator driver 103 may be configured to start the first core 100. After the power module 101 starts to supply power, the first initiator driver 103 may start the functional module 102, the Ethernet switch 104, the secure boot 105, the packet forwarding engine 106, and the low latency communication engine 107, so as to support normal operations of various functions of the first core 100. The Ethernet switch 104 may implement interaction between the first core 100 and the cloud platform and network corresponding to a vehicle. The secure boot 105 may prevent malware intrusion. The packet forwarding engine 106 may implement packet forwarding. The low latency communication engine 107 may implement communication of a controller area network (Controller Area Network, CAN) bus, a local interconnect network (Local Interconnect Network, LIN) bus, a FlexRay bus, and the like in the vehicle. The first initiator driver 103 may be further configured to send a startup instruction through an internal communication protocol to start a second initiator driver 202 corresponding to the second core 200, so as to start the second core 200.

In FIG. 1, the second core 200 may include a plurality of application programs 201, a second initiator driver 202, an operating system kernel 203, a root file system (RootFS) 204, and a device tree blob (Device Tree Blob, DTB) 205. The application programs 201 may be configured to implement corresponding functions in the vehicle. The second initiator driver 202 may be configured to start the second core 200. In response to the startup instruction sent by the first initiator driver 103, the second initiator driver 202 may start the operating system kernel 203, mount the root file system 204, and load the device tree blob 205, so as to support normal operation of various functions of the second core 200. The operating system kernel 203 may refer to a kernel of a Linux operating system and may be configured to implement data interaction and control inside the second core 200. The root file system 204 may implement file storage, access, and the like inside the operating system. The device tree blob 205 may provide a machine-readable binary file.

Embodiments of the present application are described below with reference to the accompanying drawings.

Referring to FIG. 2, a remote control method according to the present application includes:
S110: a first core starts up in response to a received remote control instruction.

The remote control instruction may refer to a control instruction delivered by a cloud platform corresponding to the vehicle. The remote control instruction may be an instruction based on a message queuing telemetry transport (Message Queuing Telemetry Transport, MQTT) protocol, for example, the air conditioner of the vehicle is remotely controlled to be opened before the vehicle is used, and the window is remotely controlled to be closed when a user forgets to close the window.

In the embodiments of the present application, the remote control instruction may be classified into a remote control instruction of a quick response type and a remote control instruction of a non-quick response type. The remote control instruction of the quick response type may refer to a remote control instruction that needs to be executed as quickly as possible or is executed in real time, and the remote control instruction of the non-quick response type may refer to a remote control instruction that does not need to be executed as quickly as possible or may be executed in non-real time. According to an implementation, a user may deliver a remote control instruction to a vehicle through a user terminal (such as a mobile phone and a computer), and the user terminal may remotely upload the control instruction to the cloud platform, so that the cloud platform may remotely send the remote control instruction to a first core in a domain controller of the vehicle through Telematics-BOX (TBOX).

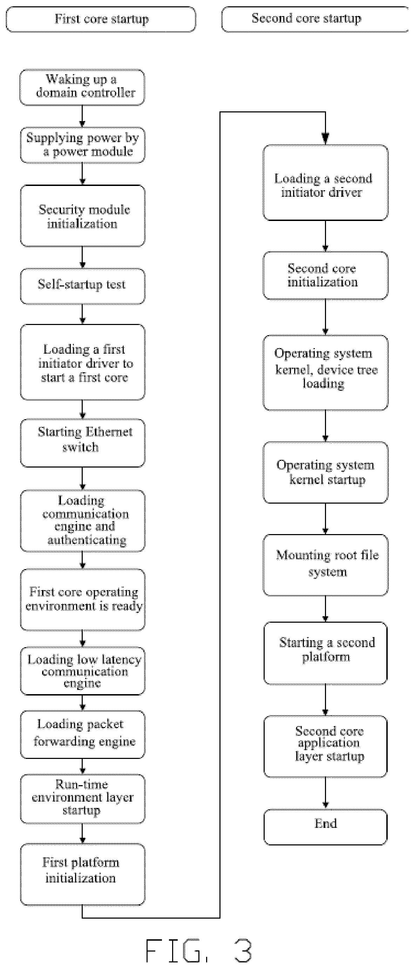

According to an implementation, as shown in FIG. 3, after receiving the remote control instruction, the TBOX may wake up the domain controller; and when the domain controller is woken up, the domain controller may execute the startup of the power module, then perform initialization and self-startup test of the SecBoot in sequence, and load a first initiator driver to start the first core.

Optionally, after the first core starts up, the Ethernet module may be further started, and the communication engine is loaded and authenticated, so as to ensure that the Ethernet functional communication is normal. After the first core operating environment is ready, LLCE may be loaded to reduce the processing load of the kernel on the Ethernet data packet, PFE may be loaded, CAN, LIN and FlexRay communication are started to provide low-delay processing of a communication interface, and reduce the load on a main central processing unit (Central Processing Unit, CPU) for the related tasks of the communication interface; and a run-time environment (Run-time Environment, RTE) layer is started and a first platform is initialized.

S120: if the first core confirms that the type of the remote control instruction is a quick response type, the first core executes the remote control instruction.

According to an implementation, if the first core confirms that the type of the remote control instruction is the quick response type, the first core may send the remote control instruction to the ECU to be controlled, so that the ECU executes the remote control instruction.

S130: if the first core confirms that the type of the remote control instruction is a non-quick response type, after a second core starts up, the first core sends the remote control instruction to the second core, such that the second core executes the remote control instruction, wherein the time required for the startup of the first core is shorter than the time required for the startup of the second core.

According to an implementation, if the first core confirms that the type of the remote control instruction is the non-quick response type, the first core may first store the remote control instruction in a specified location, and send the remote control instruction to the second core through an internal communication protocol after the second core starts up, so that the second core executes the remote control instruction.

According to an implementation, the second core may be started by the first core, as shown in FIG. 3, after the first platform is initialized, the second initiator driver may be loaded to start the second core, and an operating system kernel (Linux kernel) and a device tree blob (DTB) are loaded; the operating system kernel is started, the root file system is mounted, and the second platform is started; and then an application layer in the second core is started, wherein the application layer may include a plurality of application programs.

In the embodiments of the present application, the operating system corresponding to the first core is a real-time operating system, and therefore, the time required for the startup of the first core is shorter than the time required for the startup of the second core, so that the first core may execute the remote control instruction more quickly than the second core.

According to the remote control method provided by this embodiment, after a first core starts up in response to a received remote control instruction, if the first core confirms that the type of the remote control instruction is a quick response type, the first core executes the remote control instruction; and if the first core confirms that the type of the remote control instruction is a non-quick response type, after a second core starts up, the first core sends the remote control instruction to the second core, such that the second core executes the remote control instruction, wherein the time required for the startup of the first core is shorter than the time required for the startup of the second core. In this way, after a first core starts up in response to a received remote control instruction, if the first core confirms that the type of the remote control instruction is a quick response type, the first core can execute the remote control instruction; if the first core confirms that the type of the remote control instruction is a non-quick response type, after a second core starts up, the first core sends the remote control instruction to the second core, such that the second core executes the remote control instruction; and since the time required for the startup of the first core is shorter than the time required for the startup of the second core, the response speed of the remote control instruction of the quick response type is increased.

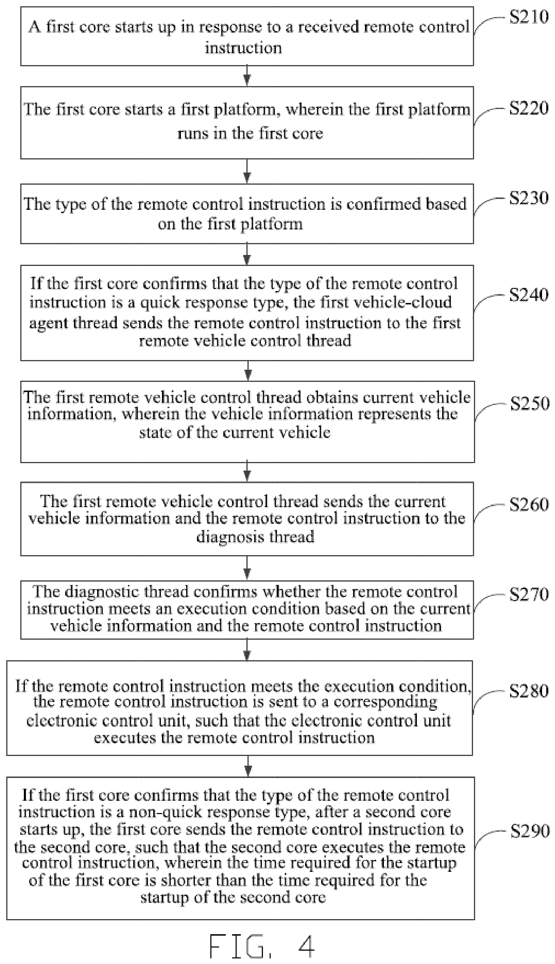

Referring to FIG. 4, a remote control method according to the present application includes:
S210: a first core starts up in response to a received remote control instruction.
S220: the first core starts a first platform, and the first platform runs in the first core.

The first platform may be an Autosar CP platform, the first platform may include a first vehicle-cloud agent thread, a first remote vehicle control thread, and a diagnosis thread. The first vehicle-cloud agent thread may be configured to confirm the type of the remote control instruction. The first remote vehicle control thread may be configured to send vehicle state information and the remote control instruction of the quick response type to the diagnosis thread. The diagnosis thread may be configured to diagnose whether the vehicle state information meets the execution condition of the remote control instruction, and control a related ECU to execute the remote control instruction when the execution condition is met.

According to an implementation, the first core may start the first platform, so that the first platform may run normally in the first core.

S230: the type of the remote control instruction is confirmed based on the first platform.

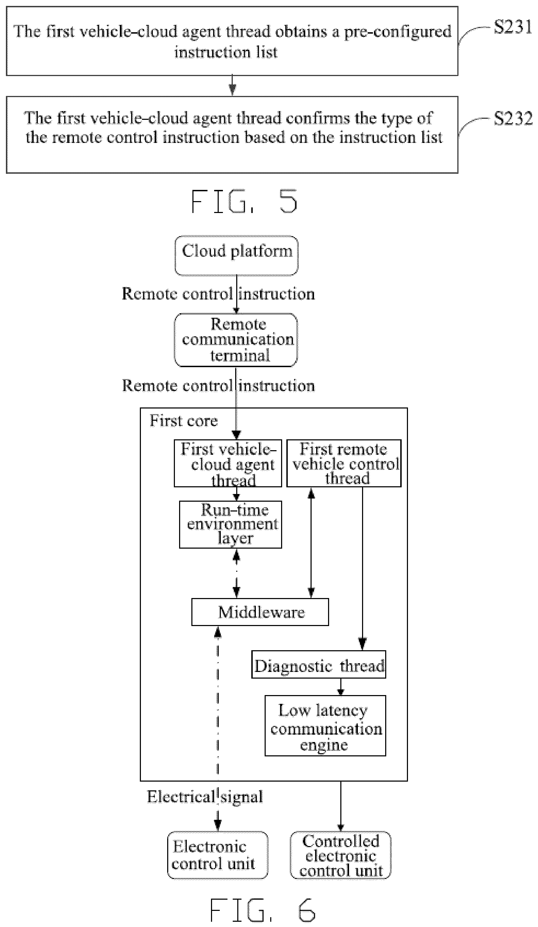

According to an implementation, as shown in FIG. 5, the confirming the type of the remote control instruction based on the first platform includes:
S231: the first vehicle-cloud agent thread obtains a pre-configured instruction list.

As shown in Table 1, the instruction list may be a list storing remote control instructions and types corresponding to the remote control instructions. The remote control instruction may be represented by a unique identifier corresponding to each remote control instruction.

**Table 1**

| Instruction identifier | Instruction type | Instruction content |
|---|---|---|
| 0001 | Quick response type | Closing a vehicle window |
| 0002 | Quick response type | Unlocking a vehicle |
| ... | ... | ... |
| 000n | Non-quick response type | Turning on an air conditioner |

Optionally, as shown in Table 2, the instruction list may include only the remote control instruction of the quick response type.

**Table 2**

| Instruction identifier | Instruction content |
|---|---|
| 0001 | Closing a vehicle window |
| 0002 | Unlocking a vehicle |
| ... | ... |
| 000n | Locking a vehicle |

Optionally, the contents of the instruction list may be pre-configured based on user requirements or default settings and stored in a specified location.

According to an implementation, after receiving the remote control instruction, the first vehicle-cloud agent thread may obtain a pre-configured instruction list from a specified location.

S232: the first vehicle-cloud agent thread confirms the type of the remote control instruction based on the instruction list.

According to an implementation, as shown in FIG. 6, after receiving the remote control instruction, the first vehicle-cloud agent thread may parse the remote control instruction and obtain an identifier of the remote control instruction, and match the identifier of the remote control instruction with an identifier in the instruction list, so as to confirm the type of the remote control instruction.

S240: if the first core confirms that the type of the remote control instruction is a quick response type, the first vehicle-cloud agent thread sends the remote control instruction to the first remote vehicle control thread.

According to an implementation, as shown in FIG. 6, if the first vehicle-cloud agent thread in the first core confirms that the type of the remote control instruction is the quick response type, the first vehicle-cloud agent thread sends the remote control instruction to the first remote vehicle control thread through the RTE.

S250: the first remote vehicle control thread obtains current vehicle information, and the vehicle information represents the state of the current vehicle.

The vehicle information may refer to an electrical signal output by one or more ECUs in the vehicle, and the electrical signal may represent a state of a component controlled by the corresponding ECU.

According to an implementation, as shown in FIG. 6, the vehicle information may be actively reported by the ECU to the first remote vehicle control thread periodically through the middleware in the first core and the RTE, and the first remote vehicle control thread may wait for reporting of the vehicle information after receiving the remote control instruction of the quick response type, so as to obtain the current vehicle information.

Optionally, to speed up the response to the remote control instruction of the quick response type, the reporting period of the ECU may be appropriately adjusted, so that the time interval of the ECU reporting is as small as possible.

According to another implementation, after receiving the remote control instruction of the quick response type, the first remote vehicle control thread may parse the remote control instruction of the quick response type, confirm an ECU signal required for executing the remote control instruction, and then send a signal obtaining instruction to a corresponding ECU through the middleware in the first core and the RTE. After receiving the signal obtaining instruction, the corresponding ECU may send its electrical signal to the first remote vehicle control thread through the middleware in the first core and the RTE.

S260: the first remote vehicle control thread sends the current vehicle information and the remote control instruction to the diagnosis thread.

According to an implementation, as shown in FIG. 6, after obtaining the remote control instruction of the quick response type and the current vehicle information based on steps S240 and S250, the first remote vehicle control thread may send the obtained remote control instruction of the quick response type and the current vehicle information to the diagnostic thread.

S270: the diagnostic thread confirms whether the remote control instruction meets an execution condition based on the current vehicle information and the remote control instruction.

According to an implementation, as shown in FIG. 6, the diagnostic thread may confirm whether the remote control instruction meets the execution condition based on the obtained current vehicle information and the remote control instruction.

For example, the remote control instruction may be vehicle unlocking, and the current vehicle information may be whether the vehicle is currently in a locked state. If the vehicle is currently in the locked state, the diagnostic thread may confirm that the remote control instruction meets the execution condition; and if the vehicle is currently in an unlocked state, the diagnostic thread may confirm that the remote control instruction does not meet the execution condition.

S280: if the remote control instruction meets the execution condition, the remote control instruction is sent to a corresponding electronic control unit, such that the electronic control unit executes the remote control instruction.

According to an implementation, as shown in FIG. 6, if the diagnosis thread confirms that the remote control instruction meets the execution condition, the remote control instruction may be sent to the corresponding electronic control unit through a CAN with flexible data rate (CANFD) channel in the LLCE, such that the corresponding electronic control unit executes the remote control instruction.

Optionally, if the diagnostic thread confirms that the remote control instruction does not meet the execution condition, the remote control instruction may be discarded.

S290: if the first core confirms that the type of the remote control instruction is a non-quick response type, after a second core starts up, the first core sends the remote control instruction to the second core, such that the second core executes the remote control instruction, wherein the time required for the startup of the first core is shorter than the time required for the startup of the second core.

According to the remote control method provided by this embodiment, in this way, after a first core starts up in response to a received remote control instruction, if the first core confirms that the type of the remote control instruction is a quick response type, the first core can execute the remote control instruction; if the first core confirms that the type of the remote control instruction is a non-quick response type, after a second core starts up, the first core sends the remote control instruction to the second core, such that the second core executes the remote control instruction; and since the time required for the startup of the first core is shorter than the time required for the startup of the second core, the response speed of the remote control instruction of the quick response type is increased. In addition, in this embodiment, the type of the remote control instruction may be confirmed by the first vehicle-cloud agent thread, and when the remote control instruction is of a quick response type, the diagnosis module may obtain current vehicle information and confirm whether the remote control instruction meets an execution condition. If the execution condition is met, the remote control instruction may be sent to a corresponding electronic control unit, such that the electronic control unit executes the remote control instruction, and therefore, the execution safety of the remote control instruction is improved, potential safety hazards caused by the execution of the remote control instruction when the execution conditions are not met is not met can be avoided, and further, the safety of the vehicle is improved.

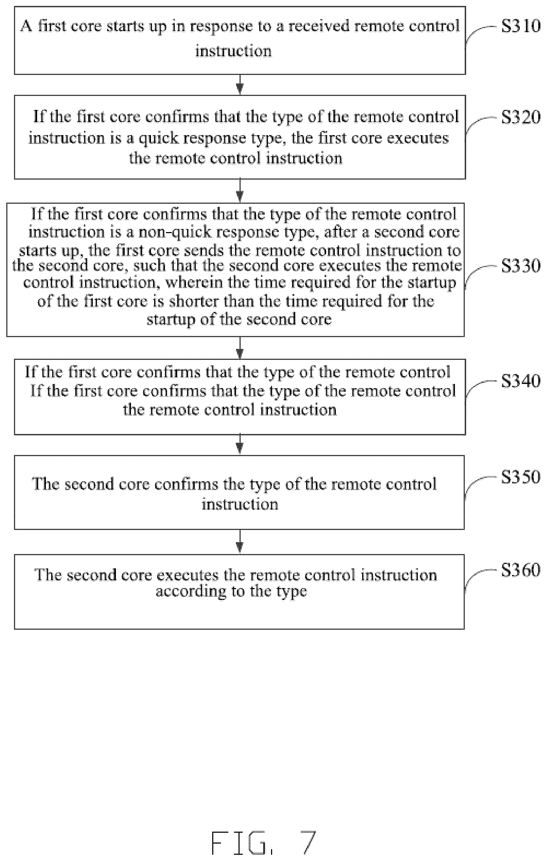

Referring to FIG. 7, a remote control method according to the present application includes:
S310: a first core starts up in response to a received remote control instruction.
S320: if the first core confirms that the type of the remote control instruction is a quick response type, the first core executes the remote control instruction.
S330: if the first core confirms that the type of the remote control instruction is a non-quick response type, after a second core starts up, the first core sends the remote control instruction to the second core, such that the second core executes the remote control instruction, wherein the time required for the startup of the first core is shorter than the time required for the startup of the second core.
S340: if the first core confirms that the type of the remote control instruction is a non-quick response type, the second core obtains the remote control instruction.

According to an implementation, after starting up, the second core may send a request of obtaining a remote control instruction of a non-quick response type to the first core, and the first core obtains the remote control instruction of the non-quick response type from a specified location in response to the obtaining request and sends the remote control instruction of the non-quick response type to the second core through an internal communication protocol.

According to another implementation, after detecting that the second core starts up, the first core may send the remote control instruction of the non-quick response type stored in the designated location to the second core through an internal communication protocol.

S350: the second core confirms the type of the remote control instruction.

According to an implementation, the second core may start a second platform first, wherein the second platform may run in the second core, and then the second core confirms the type of the remote control instruction based on the second platform.

The second platform may be an Autosar AP platform, the second platform may include a second vehicle-cloud agent thread and a second remote vehicle control thread. The second vehicle-cloud agent thread may be configured to confirm the type of the remote control instruction. The second remote vehicle control thread may be configured to send vehicle state information and the remote control instruction of the non-quick response type to the diagnosis thread of the first platform. The diagnosis thread may be configured to diagnose whether the vehicle state information meets the execution condition of the remote control instruction, and control a related ECU to execute the remote control instruction when the execution condition is met.

Optionally, the second vehicle-cloud agent thread may first obtain a pre-configured instruction list, and then confirm the type of the remote control instruction based on the instruction list.

The instruction list may be the same as Table 1 in step S231, or may include only the remote control instruction of the non-quick response type as shown in Table 3.

**Table 3**

| Instruction identifier | Instruction content |
|---|---|
| 0001 | Closing a vehicle window after half an hour |
| 0002 | Turning on an air conditioner |
| ... | ... |
| 000n | Playing music |

Optionally, if the instruction list is the same as the list in Table 1, the instruction list may be stored in a common storage space accessible to both the first core and the second core, such that the second vehicle-cloud agent thread may obtain the pre-configured instruction list from the common storage space.

Optionally, if the instruction list is as shown in Table 3, the instruction list may be stored in a specified location accessible only to the second core, such that the second vehicle-cloud agent thread may obtain the pre-configured instruction list from the specified location.

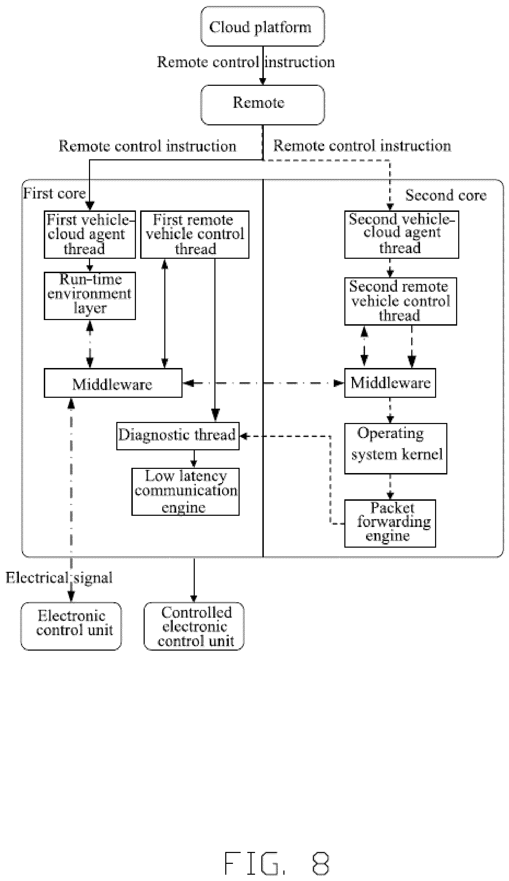

According to an implementation, as shown in FIG. 8, the first core may send the remote control instruction of the non-quick response type to the second vehicle-cloud agent thread, and after receiving the remote control instruction, the second vehicle-cloud agent thread may parse the remote control instruction and obtain an identifier of the remote control instruction, and match the identifier of the remote control instruction with an identifier in the instruction list, so as to confirms the type of the remote control instruction.

Optionally, as shown in FIG. 8, after the second core starts up, the TBOX may also directly send the remote control instruction to the second vehicle-cloud agent thread; and after receiving the remote control instruction, the second vehicle-cloud agent thread may parse the remote control instruction and obtain an identifier of the remote control instruction, and match the identifier of the remote control instruction with an identifier in the instruction list, so as to confirm the type of the remote control instruction.

Optionally, the second vehicle-cloud agent thread may also directly confirm the remote control instruction from the first core as the remote control instruction of the non-quick response type.

Optionally, the second vehicle-cloud agent thread may also directly confirm the user-defined remote control instruction from TBOX as the remote control instruction of the non-quick response type. For example, the user-defined remote control instruction may be an instruction including commands for controlling a plurality of ECUs.

S360: the second core executes the remote control instruction according to the type.

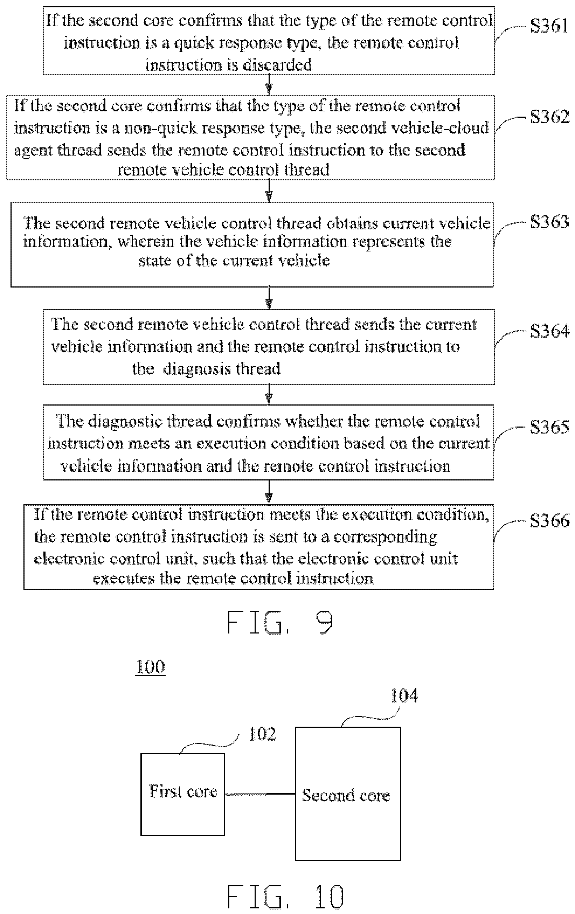

According to an implementation, as shown in FIG. 9, the second core executing the remote control instruction according to the type includes:
S361: if the second core confirms that the type of the remote control instruction is a quick response type, the remote control instruction is discarded.

According to an implementation, if the second core confirms that the type of the remote control instruction is a quick response type, the remote control instruction may be discarded.

S362: if the second core confirms that the type of the remote control instruction is a non-quick response type, the second vehicle-cloud agent thread sends the remote control instruction to the second remote vehicle control thread.

According to an implementation, referring to FIG. 8 again, if the second vehicle-cloud agent thread in the second core confirms that the type of the remote control instruction is the non-quick response type, the second vehicle-cloud agent thread may send the remote control instruction to the second remote vehicle control thread.

S363: the second remote vehicle control thread obtains current vehicle information, and the vehicle information represents the state of the current vehicle.

According to an implementation, as shown in FIG. 8, the vehicle information may be actively reported by the ECU to the second remote vehicle control thread periodically through the middleware in the first core and the middleware in the second core, and the second remote vehicle control thread may wait for reporting of the vehicle information after receiving the remote control instruction of the non-quick response type, so as to obtain the current vehicle information.

Optionally, to speed up the response to the remote control instruction of the quick response type, the reporting period of the ECU may be appropriately adjusted, so that the time interval of the ECU reporting is as small as possible.

Optionally, the middleware in the second core may be a service-oriented architecture (Service-Oriented Architecture, SOA) middleware.

According to another implementation, after receiving the remote control instruction of the non-quick response type, the second remote vehicle control thread may parse the remote control instruction of the non-quick response type, confirm an ECU signal required for executing the remote control instruction, and then send a signal obtaining instruction to a corresponding ECU through the middleware in the second core and the middleware in the first core. After receiving the signal obtaining instruction, the corresponding ECU may send its electrical signal to the second remote vehicle control thread through the middleware in the first core and the middleware in the second core.

S364: the second remote vehicle control thread sends the current vehicle information and the remote control instruction to the diagnosis thread.

According to an implementation, as shown in FIG. 8, after obtaining the remote control instruction of the non-quick response type and the current vehicle information based on steps S362 and S363, the second remote vehicle control thread may send the obtained remote control instruction of the non-quick response type and the current vehicle information to the diagnostic thread through the middleware in the second core, Linux system, and PFE.

S365: the diagnostic thread confirms whether the remote control instruction meets an execution condition based on the current vehicle information and the remote control instruction.

According to an implementation, as shown in FIG. 8, the diagnostic thread may confirm whether the remote control instruction meets the execution condition based on the obtained current vehicle information and the remote control instruction.

For example, the remote control instruction may be turning on an air conditioner, and the current vehicle information may be a current battery level of the vehicle, whether the air conditioner is currently in a turn-on state, and the like. If the current battery level of the vehicle may support operation of the air conditioner and the air conditioner is currently in a turn-off state, the diagnosis thread may confirm that the remote control instruction meets the execution condition; and if the current battery level of the vehicle is insufficient to support operation of the air conditioner or the air conditioner is currently in the turn-on state, the diagnosis thread may confirm that the remote control instruction does not meet the execution condition.

S366: if the remote control instruction meets the execution condition, the remote control instruction is sent to a corresponding electronic control unit, such that the electronic control unit executes the remote control instruction.

According to an implementation, as shown in FIG. 8, if the diagnosis thread confirms that the remote control instruction meets the execution condition, the remote control instruction may be sent to the corresponding electronic control unit through a CAN with flexible data rate (CANFD) channel in the LLCE, such that the corresponding electronic control unit executes the remote control instruction.

Optionally, if the diagnostic thread confirms that the remote control instruction does not meet the execution condition, the remote control instruction may be discarded.

According to the remote control method provided by this embodiment, in this way, after a first core starts up in response to a received remote control instruction, if the first core confirms that the type of the remote control instruction is a quick response type, the first core can execute the remote control instruction; if the first core confirms that the type of the remote control instruction is a non-quick response type, after a second core starts up, the first core sends the remote control instruction to the second core, such that the second core executes the remote control instruction; and since the time required for the startup of the first core is shorter than the time required for the startup of the second core, the response speed of the remote control instruction of the quick response type is increased. In addition, in this embodiment, the type of the remote control instruction may be confirmed by the second vehicle-cloud agent thread, and when the remote control instruction is of a quick response type, the diagnosis module may obtain current vehicle information and confirm whether the remote control instruction meets an execution condition. If the execution condition is met, the remote control instruction may be sent to a corresponding electronic control unit, such that the electronic control unit executes the remote control instruction, and therefore, the execution safety of the remote control instruction is improved, potential safety hazards caused by the execution of the remote control instruction when the execution conditions are not met is not met can be avoided, and further, the safety of the vehicle is improved.

Referring to FIG. 10, a domain controller 100 according to the present application includes a first core and a second core, wherein:
the first core is configured to startup in response to a received remote control instruction; confirm the type of the remote control instruction; if confirming that the type of the remote control instruction is a quick response type, execute the remote control instruction; and if confirming that the type of the remote control instruction is a non-quick response type, send the remote control instruction to the second core after a second core starts up, such that the second core executes the remote control instruction, wherein the time required for the startup of the first core is shorter than the time required for the startup of the second core; and
the second core is configured to, if the first core confirms that the type of the remote control instruction is the non-quick response type, receive the remote control instruction sent by the first core after starting up and execute the remote control instruction.

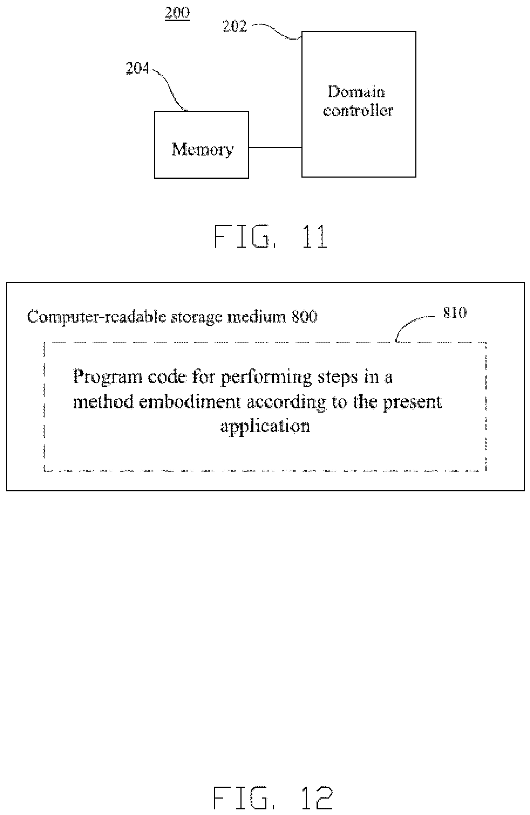

A vehicle provided by the present application is described with reference to FIG. 11.

Referring to FIG. 11, based on the remote control method and the domain controller, another vehicle 200 that may execute the remote control method is provided in an embodiment of the present application. The vehicle 200 includes one or more (only one shown) domain controllers 202 and a memory 204 coupled to each other. The memory 204 stores a program that may execute the contents of the foregoing embodiments, and the domain controller 202 may execute the program stored in the memory 204.

The domain controller 202 may be the domain controller in the foregoing embodiments.

The memory 204 may include a random access memory (Random Access Memory, RAM) or a read-only memory (Read-Only Memory). The memory 204 may be configured to store instructions, programs, codes, code sets, or instruction sets. The memory 204 may include a program storage area and a data storage area, wherein the program storage area may store instructions for implementing an operating system, instructions for implementing at least one function (such as a touch function, a sound playing function, and an image playing function), instructions for implementing various method embodiments described below, and the like. The data storage area may also store data (such as a phone book, audio and video data, and chat record data) created by the terminal 200 in use.

Referring to FIG. 12, a block diagram of a structure of a computer-readable storage medium according to an embodiment of the present application is shown. The computer-readable storage medium 800 stores program code, which can be called by a processor to execute the method according to the above method embodiment.

The computer-readable storage medium 800 may be an electronic memory such as a flash memory, an electrically erasable programmable read-only memory (EEPROM), an EPROM, a hard disk, or an ROM. Optionally, the computer-readable storage medium 800 includes a non-volatile computer-readable storage medium. The computer-readable storage medium 800 has storage space for program code 810 for executing any method steps in the above methods. These program codes may be read from or written into one or more computer program products. The program code 810 may be compressed, for example, in a suitable form.

In summary, according to the remote control method, the domain controller, and the vehicle provided by the present application, after a first core starts up in response to a received remote control instruction, if the first core confirms that the type of the remote control instruction is a quick response type, the first core executes the remote control instruction; and if the first core confirms that the type of the remote control instruction is a non-quick response type, after a second core starts up, the first core sends the remote control instruction to the second core, such that the second core executes the remote control instruction, wherein the time required for the startup of the first core is shorter than the time required for the startup of the second core. In this way, after a first core starts up in response to a received remote control instruction, if the first core confirms that the type of the remote control instruction is a quick response type, the first core can execute the remote control instruction; if the first core confirms that the type of the remote control instruction is a non-quick response type, after a second core starts up, the first core sends the remote control instruction to the second core, such that the second core executes the remote control instruction; and since the time required for the startup of the first core is shorter than the time required for the startup of the second core, the response speed of the remote control instruction of the quick response type is increased.

Finally, it should be noted that the foregoing embodiments are merely intended for describing the technical solutions of the present application other than limiting the present application. Although the present application is described in detail with reference to the foregoing embodiments, those of ordinary skill in the art should understand that modifications can still be made to the technical solutions described in the foregoing embodiments or equivalent replacements can still be made to some technical features thereof, without departing from the scope of the technical solutions of embodiments of the present application.

## Claims

1. A remote control method, comprising:
a first core starting up in response to a received remote control instruction;
if the first core confirms that the type of the remote control instruction is a quick response type, the first core executing the remote control instruction; and
if the first core confirms that the type of the remote control instruction is a non-quick response type, after a second core starts up, the first core sending the remote control instruction to the second core, such that the second core executes the remote control instruction, wherein the time required for the startup of the first core is shorter than the time required for the startup of the second core.

2. The method according to claim 1, wherein the if the first core confirms that the type of the remote control instruction is a quick response type, the first core executing the remote control instruction, further comprises:
the first core starting a first platform, wherein the first platform runs in the first core; and
confirming the type of the remote control instruction based on the first platform.

3. The method according to claim 2, wherein the first platform comprises a first vehicle-cloud agent thread, and the confirming the type of the remote control instruction based on the first platform comprises:
the first vehicle-cloud agent thread obtaining a pre-configured instruction list; and
the first vehicle-cloud agent thread confirming the type of the remote control instruction based on the instruction list.

4. The method according to claim 3, wherein the first platform further comprises a first remote vehicle control thread and a diagnostic thread, and the if the first core confirms that the type of the remote control instruction is a quick response type, controlling the first core to execute the remote control instruction comprises:
if the first core confirms that the type of the remote control instruction is the quick response type, the first vehicle-cloud agent thread sending the remote control instruction to the first remote vehicle control thread;
the first remote vehicle control thread obtaining current vehicle information, wherein the vehicle information represents the state of the current vehicle;
the first remote vehicle control thread sending the current vehicle information and the remote control instruction to the diagnosis thread, wherein the diagnostic thread confirms whether the remote control instruction meets an execution condition based on the current vehicle information and the remote control instruction; and
if the remote control instruction meets the execution condition, sending the remote control instruction to a corresponding electronic control unit, such that the electronic control unit executes the remote control instruction.

5. The method according to claim 1, wherein the method further comprises:
if the first core confirms that the type of the remote control instruction is a non-quick response type, the second core obtaining the remote control instruction;
the second core confirming the type of the remote control instruction; and
the second core executing the remote control instruction according to the type.

6. The method according to claim 5, wherein the second core confirming the type of the remote control instruction comprises: the second core starting a second platform, wherein the second platform runs in the second core; and
confirming the type of the remote control instruction based on the second platform.

7. The method according to claim 6, wherein the second platform comprises a second vehicle-cloud agent thread, and the confirming the type of the remote control instruction based on the second platform comprises:
the second vehicle-cloud agent thread obtaining a pre-configured instruction list; and
the second vehicle-cloud agent thread confirming the type of the remote control instruction based on the instruction list.

8. The method according to claim 7, wherein the second platform further comprises a second remote vehicle control thread, a first platform runs in the first core, the first platform comprises a diagnostic thread, and the second core executing the remote control instruction according to the type comprises:
if the second core confirms that the type of the remote control instruction is a quick response type, discarding the remote control instruction;
if the second core confirms that the type of the remote control instruction is a non-quick response type, the second vehicle-cloud agent thread sending the remote control instruction to the second remote vehicle control thread;
the second remote vehicle control thread obtaining current vehicle information, wherein the vehicle information represents the state of the current vehicle;
the second remote vehicle control thread sending the current vehicle information and the remote control instruction to the diagnosis thread;
the diagnostic thread confirming whether the remote control instruction meets an execution condition based on the current vehicle information and the remote control instruction; and
if the remote control instruction meets the execution condition, sending the remote control instruction to a corresponding electronic control unit, such that the electronic control unit executes the remote control instruction.

9. A domain controller, comprising a first core and a second core, wherein:
the first core is configured to startup in response to a received remote control instruction; confirm the type of the remote control instruction; if confirming that the type of the remote control instruction is a quick response type, execute the remote control instruction; and if confirming that the type of the remote control instruction is a non-quick response type, send the remote control instruction to the second core after a second core starts up, such that the second core executes the remote control instruction, wherein the time required for the startup of the first core is shorter than the time required for the startup of the second core; and
the second core is configured to, if the first core confirms that the type of the remote control instruction is the non-quick response type, receive the remote control instruction sent by the first core after starting up and execute the remote control instruction.

10. A vehicle, comprising a domain controller and a memory, wherein the domain controller comprises a first core and a second core; and
one or more programs are stored in the memory and configured to be executed by the domain controller, and the one or more programs are configured to perform the method according to any one of claims 1 to 8.

11. A computer-readable storage medium, wherein the computer-readable storage medium stores program code, and the method according to claims 1 to 8 is performed when the program code is run.
